# EUROPÄISCHE PATENTSCHRIFT

(11) **EP 2 187 187 B1**
(45) Veröffentlichungstag und Bekanntmachung des Hinweises auf die Patenterteilung: **13.09.2017**
(21) Anmeldenummer: 09014330.6
(22) Anmeldetag: 17.11.2009
(51) Int. Cl.: G01G 3/14, G01L 1/22, G01L 5/16

(54) **Wägedisc**
Weighing disc
Disque de balance

(30) Priorität: 17.11.2008 DE 102008057796
(43) Veröffentlichungstag der Anmeldung: 19.05.2010
(73) Patentinhaber: Schenck Process Europe GmbH, 64293 Darmstadt (DE)
(72) Erfinder: Rettig, Manfred, 64367 Mühltal (DE)

(56) Entgegenhaltungen:
- EP-A1- 0 499 846
- EP-A2- 0 351 006
- EP-A2- 0 465 881

## Beschreibung

Die Erfindung betrifft eine Wägedisc, d.h. eine im Wesentlichen rotationssymmetrische, zylindrische Wägezelle, mit einem konzentrisch angeordneten Krafteinleitungselement.

Rotationssymmetrische, zylindrische Wägezellen sind an und für sich dem Fachmann hinlänglich bekannt, werden üblicherweise in Kraftmessvorrichtungen eingesetzt und wandeln unter der Einwirkung einer zu messender Kraft auftretende Verformungen in elektrische Signale um. Gegenüber anderen Arten von Wägezellen, wie z.B. Wägebalken, bieten solche gattungsbildenden Wägezellen insbesondere den Vorteil einer geringeren Bauhöhe bei hoher Auflösung über große Messbereiche hinweg.

Beispielhaft wird hier auf die Patentschrift DE 39 37 318 C1 verwiesen. Dort ist eine Kraftmessvorrichtung beschrieben, welche eine gattungsbildende Mess- oder Wägezelle mit zwei konzentrisch ineinander angeordneten Verformungsringen und drei konzentrisch angeordneten Krafteinleitungselementen, ein inneres, ein mittleres und ein äußeres Krafteinleitungselement besitzt. Die Wägezelle ist zum Einsatz zwischen einem plattenförmigen Kraftübertragungselement und einer unteren Trägerplatte angeordnet, wobei das mittlere Krafteinleitungselement, ein Krafteinleitungsring, das plattenförmige Kraftübertragungselement trägt und die inneren und äußeren Krafteinleitungselement direkt an deren Unterseite an der Trägerplatte befestigt sind. Die in der vorgenannten Patentschrift beschriebene Wägezelle und die untere Trägerplatte umschließen einen Ringhohlraum, in dem sich die Messflächen der Verformungsringe finden, an der elektromechanische Dehnungsmesselemente angeordnet sind. Nachteilig bei dieser vorbeschriebenen Wägezelle ist jedoch unter Anderem, dass diese innerhalb der Kraftmessvorrichtung ein zusätzliches Kraftübertragungselement als separates, mit der Wägezelle zu verbindendes Teil erfordert und ferner größere unerwünschte Krafteinleitungseinflüsse bedingt, welche die Genauigkeit beeinflussen, und somit höhere messtechnische Anforderungen bei der Auswertung nach sich zieht.

Weiterer Stand der Technik ist durch Dokument EP 0 465 881 A2 gegeben.

Aufgabe der Erfindung ist es, eine demgemäße gattungsbildende Wägezelle zu schaffen, die sich durch eine einfachere Bauweise und eine geringere Anzahl zusätzlich benötigter Komponenten beim Einsatz in Kraftmessvorrichtungen, insbesondere aufgrund deren körperlichen Struktur, und somit in Folge durch Kostenreduzierung sowie ferner durch eine weiter gesteigerte Verminderung unerwünschter Lasteinleitungseinflüsse auf die Messgenauigkeit auszeichnet.

Die durch die Erfindung bereitgestellte Lösung ist bereits durch eine Wägezelle mit den Merkmalen des anhängigen Anspruchs 1 gegeben.

Vorteilhafte und bevorzugte Ausführungsformen oder Weiterbildungen sind Gegenstand der Unteransprüche.

Die Erfindung sieht somit eine Wägezelle vor, welche im Wesentlichen rotationssymmetrisch und zylindrisch ist und eine Rotationsachse A besitzt. Diese Wägezelle ist gekennzeichnet durch einen inneren zylindrischen Metallkern, eine daran konzentrisch ausgeformte Lasteinleitungsplatte, die sich im Wesentlichen über den gesamten Durchmesser der Wägezelle erstreckt, einen am Metallkern konzentrisch ausgebildeten, sich radial nach außen erstreckenden und axial von der Lasteinleitungsplatte beabstandeten dünnen Verbindungssteg über den ein ringförmiger Verformungskörper mit der Lasteinleitungsplatte verbunden ist, wobei auf der radial äußeren Seite des Verformungskörpers dieser mit einem zweiten, gleichermaßen ringförmigen, konzentrisch angeordneten dünnen Verbindungssteg an ein ringförmiges, wiederum konzentrisch ausgebildetes Lastausleitungsteil angeschlossen ist, und wobei sich das Lastausleitungsteil von dem Verbindungssteg axial in entgegengesetzter Richtung zu der Lasteinleitungsplatte erstreckt, und wobei ferner ein konzentrisch ausgebildeter Befestigungsflansch auf der radial äußeren Seite des Lastausleitungsteils über einen dritten, gleichermaßen ringförmigen, konzentrisch angeordneten, dünnen Verbindungssteg angebunden ist.

Die vorgeschlagene Wägezelle vereinigt somit die Vorteile einer bekannten rotationssymmetrischen, zydrindrischen gattungsbildenden Wägezellen mit dem weiteren Vorteil der Reduzierung notwendiger Kraftübertragungselemente als separate Teile und der Reduzierung von Lastausleitungseinflüssen aufgrund der bautechnischen Ausgestaltung des gesamten äußeren Lastbereichs.

Um eine formschlüssige Übertragung von Horizontalkräften auf das Krafteinleitungselement zu bewirken, ist die Lasteinleitungsplatte zweckmäßig mit einer Zentrierbohrung ausgestattet oder in alternativer Ausführung mit einer Kugelkalotte, wie beispielsweise bei einer Verwägung von Öfen häufig notwendig, ausgestattet.

Es hat sich als zweckmäßig erwiesen, die beiden ringförmigen, dünn ausgebildeten und folglich flexiblen Verbindungsstege, welche den ringförmigen Verformungskörper zwischen der Lasteinleitungsplatte und dem Lastausleitungsteil ankoppeln und quasi Gelenk wirken, auf annähernd gleicher Ebene bzw. gleichen Abstand zur Ebene der Lasteinleitungsplatte zu fertigen.

Der weitere, in entsprechender Weise flexible Verbindungssteg zwischen dem Lastausleitungsteil und dem Befestigungsflansch reduziert unerwünschte Krafteinflüsse, welche durch die Befestigung der Wägezelle hervorgerufen werden, wesentlich.

Je nach den zu übertragenden maximalen Horizontalkräften ist die Lage dieses flexiblen Verbindungssteges in Bezug auf das Lastausleitungsteil und auch dessen Stärke einstellbar.

Die Stärke dieses flexiblen Verbindungssteges ist beispielsweise durch axial voneinander beabstandete Nuten auf äußerst einfache Weise vorgebbar.

Der Befestigungsflansch kann ferner auch auf einfachste Weise durch eine Schraubverbindung mit einer Trägerplatte verbunden werden.

Der konzentrische ringförmige Verformungskörper wird zweckmäßigerweise auf der, der Lasteinleitungsplatte gegenüberliegenden Seite mit Dehnungsmess-Streifen derart bestückt, dass sowohl Längsdehnungen als auch Querkontraktionen zu erfassen sind. Hierzu sind die Messwertaufnehmer beispielsweise auf der Stirnseite des Verformungskörpers derart angeordnet, dass vier radial gerichtete und in Umfangsrichtung gleich beabstandete sowie vier tangential gerichtete und in Umfangsrichtung gleich beabstandete Messwertaufnehmer aufgebracht sind, wie in der DE 10 2006 034 086 beschrieben.

Um eine Abdeckung der Dehnungsmess-Streifen bereitzustellen, kann eine Bodenscheibe mit dem konzentrischen Lastausleitungsteil verbunden, beispielsweise verschweißt, sein. Je nach Stabilitätsanforderungen kann die Bodenscheibe dünner oder dicker ausgeführt sein.

Die Erfindung wird nachfolgend anhand von vier Ausführungsbeispielen unter Bezugnahme auf die beigefügten Zeichnungen näher beschrieben. In den Zeichnungen zeigen:
Fig. 1 eine Gesamtansicht einer Wägedisc nach der Erfindung,
Fig. 2 einen Schnitt durch die Wägedisc gemäß Fig. 1,
Fig. 3 einen Schnitt durch eine weitere Ausführungsform einer Wägedisc gemäß der Erfindung,
Fig. 4 einen Schnitt durch eine weitere Ausführungsform einer Wägedisc gemäß der Erfindung, und
Fig. 5 einen Schnitt durch eine nochmals weitere Ausführungsform einer Wägedisc nach der Erfindung.

Nachfolgend werden die in den Zeichnungen dargestellten Ausführungsformen näher beschrieben.

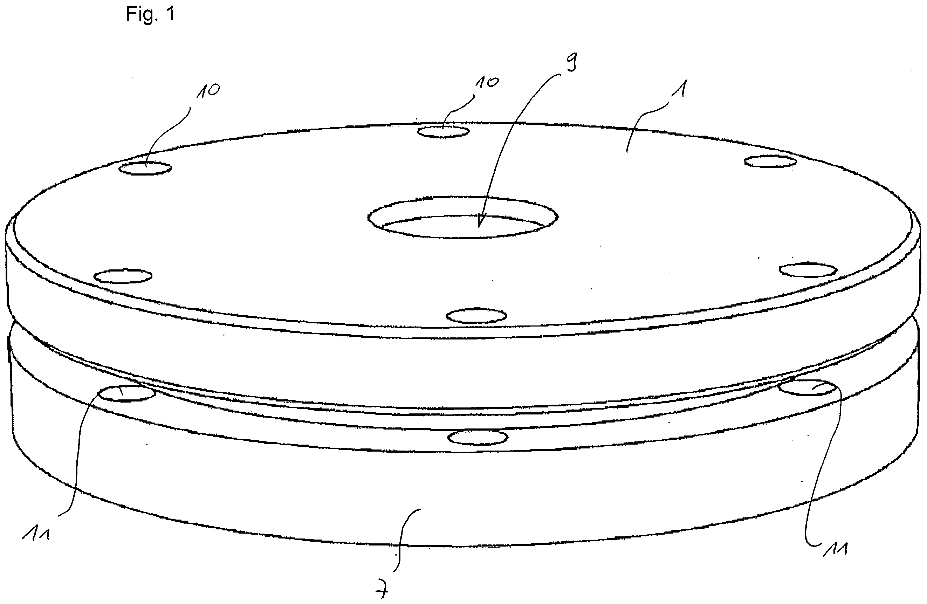

Die Figuren zeigen eine sogenannte Wägedisc oder auch Wägescheibe, d.h. eine im Wesentlichen rotationssymmetrische zylindrische Wägezelle mit einer Rotationsachse A. Die Wägezelle besitzt eine Höhe, die gegenüber Wägezellen, wie z.B. Wägebalken, wesentlich geringer ist und weist somit insgesamt eine flache scheibenartige Außenform aus, wie insbesondere bei der Gesamtansicht der Figur 1 zu sehen.

Die Wägedisc besitzt einen inneren zylindrischen Metallkern 1a mit einer daran konzentrisch ausgebildeten Lasteinleitungsplatte 1, die sich im Wesentlichen über den gesamten Durchmesser der Wägezelle erstreckt. Ferner besitzt die Wägedisc einen am Metallkern konzentrisch ausgebildeten ersten, sich radial nach außen erstreckenden und axial von der Lasteinleitungsplatte 1 beabstandeten dünnen und somit bei Krafteinwirkung flexiblen bzw. gelenkigen Verbindungssteg 2 über den ein ringförmiger Verformungskörper 3 mit der Lasteinleitungsplatte 1 verbunden ist. Auf der gegenüberliegenden, d.h. radial äußeren Seite des Verformungskörpers 3, ist der ringförmige Verformungskörper 3 mit einem zweiten, gleichermaßen ringförmigen, konzentrisch angeordneten dünnen Verbindungssteg 4 an ein ringförmiges, wiederum konzentrisch ausgebildetes Lastausleitungsteil 5 angeschlossen. Das Lastausleitungsteil 5 erstreckt sich von dem Verbindungssteg 4 axial in entgegengesetzter Richtung zu der Lasteinleitungsplatte 1. Auf der gegenüberliegenden, d.h. radial äußeren Seite des Lastausleitungsteils 5 ist dieses über einen dritten, gleichermaßen ringförmigen, konzentrisch angeordneten dünnen Verbindungssteg 6 an einen ringförmigen, wiederum konzentrisch ausgebildeten Befestigungsflansch 7 angebunden.

Alle vorgenannten Elementen der Wägedisc sind aus einem Materialstück gefertigt. Bei Einsatz der Wägedisc wird diese insgesamt über den Befestigungsflansch 7 auf einer in den Figuren nicht dargestellten Trägerplatte befestigt und die Lasteinleitungsplatte 1 erfüllt gleichzeitig die Funktion eines Kraftübertragungselements, welches bisher gemäß vorstehend beschriebenen Stand der Technik als separates Teil von der zur Trägerplatte gegenüberliegenden Seite her mit der Wägedisc verbunden werden musste.

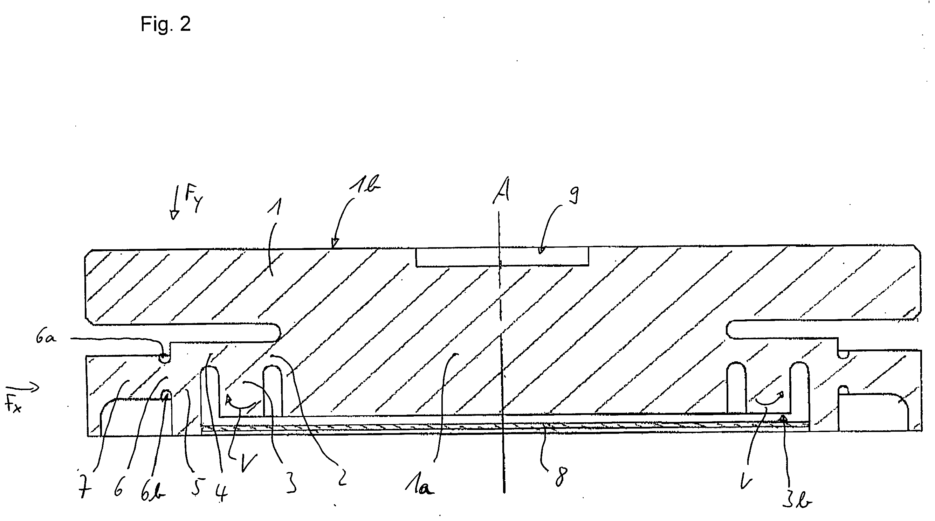

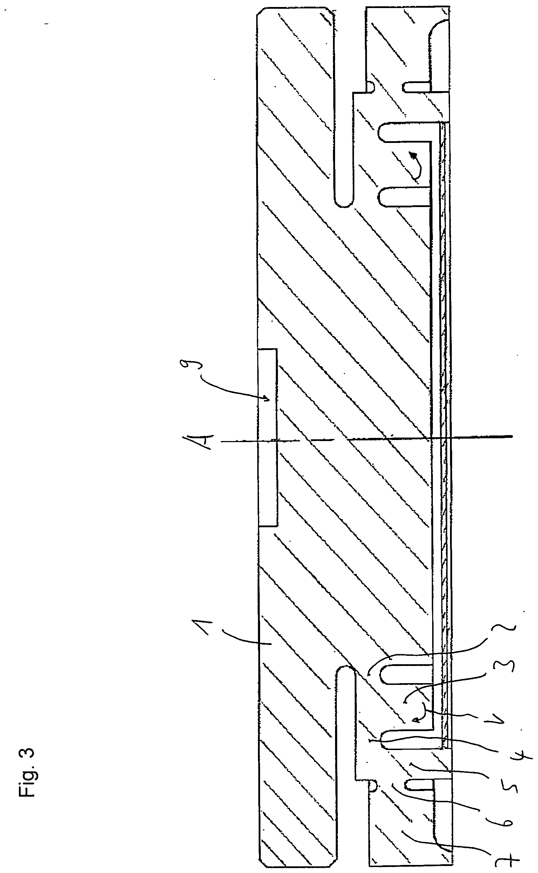

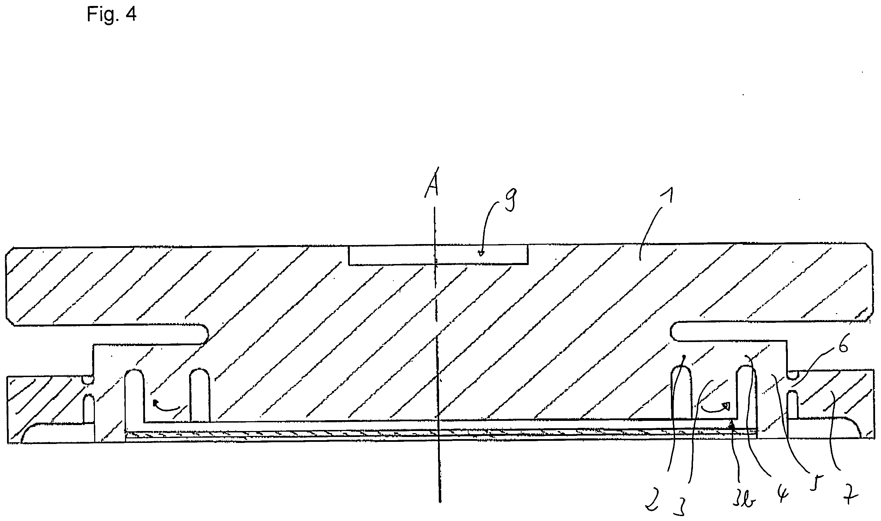

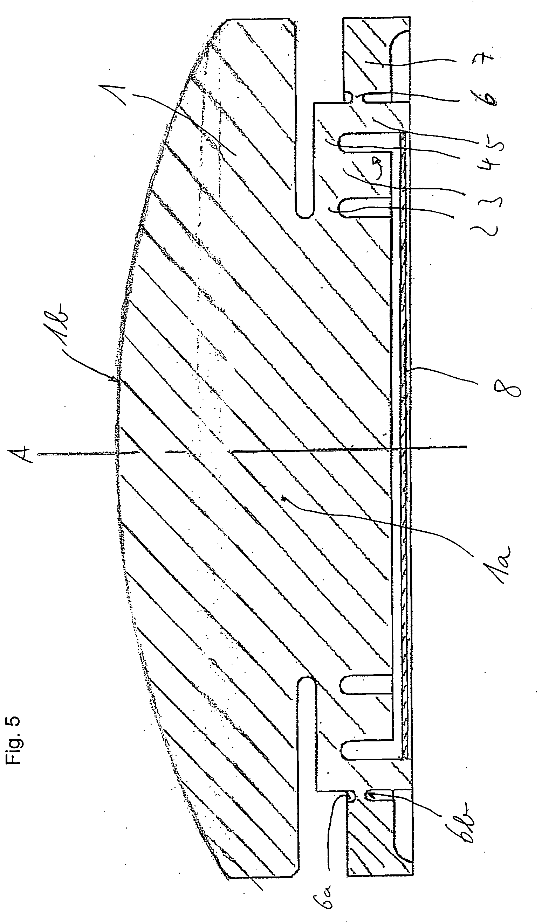

Um eine formschlüssige Übertragung von Horizontalkräften auf die Krafteinleitungsplatte zu bewirken, ist die Lasteinleitungsplatte mit einer ebenen Oberfläche 1b und zweckmäßig mit einer Zentrierbohrung 9 ausgestattet. An einer solchen, wie z.B. den Figuren 2, 3 und 4 zu entnehmen, kann z.B. direkt eine sogenannte Rippenplatte aufgenommen werden. Die Lasteinleitungsplatte 1 kann in Ergänzung oder alternativ zu einer Zentrierbohrung 9 auch mit einer Anzahl von Zentrieröffnungen 10 ausgestattet sein, welche jeweils beabstandet voneinander sich im äußeren Bereich der Lasteinleitungsplatte 1 durch diese parallel zur Achse A erstrecken. Zweckmäßig sind die einzelnen Zentrieröffnungen in Umfangsrichtung voneinander jeweils gleich voneinander beabstandet. In alternativer, bei Figur 5 gezeigten Ausführung ist die Lasteinleitungsplatte 1 mit einer Oberfläche 1c in Art einer Kugelkalotte ausgestattet, wie es beispielsweise bei einer Ofenverwägung häufig notwendig ist.

Wie den Figuren 2 bis 5 zu entnehmen, ist es zweckmäßig, die beiden Verbindungsstege 2 und 4 auf annähernd gleicher Ebene bzw. gleichen axialen Abstand zur Ebene der Lasteinleitungsplatte 1 sowie in gleicher axialer Stärke und radialer Länge zu fertigen, um den ringförmigen Verformungskörper 3 zwischen der Lasteinleitungsplatte 1 und dem Lastausleitungsteil 5 gleichförmig anzukoppeln, so dass einander entsprechende Lasteinwirkungen über die Verbindungsstege 2 bzw. 4 zu einander entsprechenden Kräfteverläufen führen und der Verformungskörper 3 somit über die zwei gegenüberliegenden Verbindungsstege 2 und 4 gleichmäßig angekoppelt bzw. angelenkt ist. Der Verförmungskörper 3 erstreckt sich von den Verbindungsstegen 2 und 4 axial in entgegengesetzter Richtung zu der Lasteinleitungsplatte 1 hin zu einem freiem Stirnende 3b.

Der dritte flexible Verbindungssteg 6 zwischen dem Lastausleitungsteil 5 und dem Befestigungsflansch 7 reduziert wiederum unerwünschte Krafteinflüsse, welche durch die notwendige Befestigung der Wägezelle an der Trägerplatte hervorgerufen werden, wesentlich.

Je nach zu übertragenden maximalen Horizontalkräften Fₓ ist die Lage, d.h. die radial verlaufene mittlere Ebene, dieses Verbindungssteges 6 in Bezug auf das Lastausleitungsteil 5 und den Befestigungsflansch 7 und auch die axiale Stärke des Verbindungssteges 6 sowie die axiale Lage der radial verlaufenen mittleren Ebene, und/oder Stärke des Befestigungsflansches 7 einstellbar.

Den Figuren 2 bis 5 sind diesbezüglich unterschiedliche Ausführungsformen dargestellt. Insbesondere ist auch erkennbar, dass die Stärke und Lage des Verbindungssteges 6 beispielsweise durch Nuten 6a, 6b auf äußerst einfache Weise aus einem bei Fertigung der Wägezelle zunächst an den Lastausleitungsteil 5 angrenzenden Bereich des Befestigungsflansches aus herausarbeitbar sind.

Der Befestigungsflansch 7 kann, wie bei Figur 1 zu sehen, mit einer Anzahl von Durchgangsöffnungen 11 ausgestattet sein, welche jeweils beabstandet voneinander sich durch den Befestigungsflansch 7 parallel zur Achse A erstrecken, um den Befestigungsflansch an der Trägerplatte, z.B. mittels Schraubverbindungen, befestigt zu werden. Die Durchgangsöffnungen 11 können hierzu auch ein Innengewinde aufweisen. Der Einfluß einer solchen Befestigung zwischen der Wägezelle und der Trägerplatte sowie evtl. weiterer Anschlusskonstruktion wird, wie vorstehend bereits erwähnt, über den Verbindungssteg 6 minimiert.

Der Verformungskörper 3 wird zweckmäßigerweise auf der der Lasteinleitungsplatte 1 gegenüberliegenden Seite mit Dehnungsmess-Streifen derart bestückt, dass sowohl Längsdehnungen als auch Querkontraktionen erfassen werden, in Reaktion auf eine mit V gekennzeichnete Verformung des Verformungskörpers 3 in Folge von Tangentialkräften F_{y}, die auf die Lasteinleitungsplatte 1 einwirken. Hierzu sind die Messwertaufnehmer beispielsweise auf der Stirnseite 3b des Verformungskörpers 3 derart angeordnet, dass vier radial gerichtete und in Umfangsrichtung gleich beabstandete sowie vier tangential gerichtete und in Umfangsrichtung gleich beabstandete Messwertaufnehmer aufgebracht sind, wie in der DE 10 2006 034 086 beschrieben.

Um eine Abdeckung für die Dehnungsmess-Streifen bereitzustellen, kann ferner eine Bodenscheibe 8 mit dem Lastausleitungsteil 5 verbunden, beispielsweise verschweißt, sein, welche zusammen mit dem Lastausleitungsteil einen Hohlraum zum Verförmungskörper 3 und zum Materialkern 1a hin ausbildet. Je nach Stabilitätsanforderungen kann die Bodenscheibe dünner oder dicker ausgeführt sein.

## Patentansprüche

1. Wägezelle, welche im Wesentlichen rotationssymmetrisch und zylindrisch ist und eine Rotationsachse A besitzt, aufweisend einen inneren zylindrischen Metallkern (1a),
eine daran konzentrisch ausgeformte Lasteinleitungsplatte (1), die sich im Wesentlichen über den gesamten Durchmesser der Wägezelle erstreckt,
einen am Metallkern konzentrisch ausgebildeten, sich radial nach außen erstreckenden und axial von der Lasteinleitungsplatte (1) beabstandeten dünnen, somit bei Krafteinwirkung flexiblen bzw. gelenkigen Verbindungssteg (2) über den ein ringförmiger Verformungskörper (3) mit der Lasteinleitungsplatte (1) verbunden ist, wobei auf der radial äußeren Seite des Verformungskörpers (3) dieser mit einem zweiten, gleichermaßen ringförmigen, konzentrisch angeordneten dünnen, somit bei Krafteinwirkung flexiblen bzw. gelenkigen Verbindungssteg (4) an ein ringförmiges, wiederum konzentrisch ausgebildetes Lastausleitungsteil 5 angeschlossen ist, und wobei sich das Lastausleitungsteil (5) von dem Verbindungssteg (4) axial in entgegengesetzter Richtung zu der Lasteinleitungsplatte (1) erstreckt,
und ein konzentrisch ausgebildeter Befestigungsflansch (7), der auf der radial äußeren Seite des Lastausleitungsteils (5) über einen dritten, gleichermaßen ringförmigen, konzentrisch angeordneten, dünnen, somit bei Krafteinwirkung flexiblen bzw. gelenkigen Verbindungssteg (6) angebunden ist.

2. Wägezelle nach Anspruch 1, welche aus einem Materialstück gefertigt ist.

3. Wägezelle nach einem der vorstehenden Ansprüche, wobei die Lasteinleitungsplatte eine ebene Oberfläche (1b) besitzt.

4. Wägezelle nach vorstehendem Anspruch, wobei die Lasteinleitungsplatte eine Zentrierbohrung besitzt.

5. Wägezelle nach einem der vorstehenden Ansprüche 1 bis 2, wobei die Lasteinleitungsplatte eine Oberfläche in Art einer Kugelkalotte besitzt.

6. Wägezelle nach einem der vorstehenden Ansprüche, wobei die beiden ersten zwei Verbindungsstege (2, 4) auf annähernd gleicher Ebene bzw. gleichen axialen Abstand zur Ebene der Lasteinleitungsplatte (1) sowie in gleicher axialer Stärke und radialer Länge gefertigt sind.

7. Wägezelle nach einem der vorstehenden Ansprüche, wobei der Verförmungskörper (3) sich von den ersten zwei Verbindungsstegen (2, 4) axial in entgegengesetzter Richtung zu der Lasteinleitungsplatte (1) hin zu einem freiem Stirnende (3b) und auf der der Lasteinleitungsplatte (1) gegenüberliegenden Seite mit Dehnungsmess-Streifen derart bestückt ist, dass sowohl Längsdehnungen als auch Querkontraktionen erfassen werden, in Reaktion auf eine Verformung des Verformungskörpers (3) in Folge von Tangentialkräften (F_{y}).

8. Wägezelle nach einem der vorstehenden Ansprüche, wobei die Lage, d.h. die radial verlaufene mittlere Ebene, des dritten Verbindungssteges (6) in Bezug auf das Lastausleitungsteil (5) und den Befestigungsflansch (7) und auch die axiale Stärke des Verbindungssteges (6) je nach zu übertragenden maximalen Horizontalkräften einstellbar sind.

9. Wägezelle nach einem der vorstehenden Ansprüche, wobei der Befestigungsflansch (7) mit einer Anzahl von Durchgangsöffnungen (11) ausgestattet ist, welche jeweils beabstandet voneinander sich durch den Befestigungsflansch (7) parallel zur Achse A erstrecken, zur Befestigung des Befestigungsflansches an der Trägerplatte.

10. Wägezelle nach einem der vorstehenden Ansprüche, wobei eine Abdeckung für Dehnungsmess-Streifen bereitgestellt ist, und zwar durch eine separate, mit dem Lastausleitungsteil (5) verbundene Bodenscheibe (8), welche zusammen mit dem Lastausleitungsteil einen Hohlraum zum Verförmungskörper (3) und zum Materialkern (1a) hin ausbildet.

## Claims

1. Load cell, which is essentially rotationally symmetrical and cylindrical and has a rotational axis A, comprising an inner cylindrical metal core (1a), a load introduction plate (1) concentrically formed thereon, which extends substantially over the entire diameter of the load cell, a connecting web (2), which is thin and thus flexible or articulated when acted upon by force, concentrically formed on the metal core, radially outwardly extending and axially spaced from the load introduction plate (1), by means of which an annular deformation body (3) is connected to the load introduction plate (1), wherein on the radially outer side of the deformation body (3), the latter is connected by a second connecting web (4), which is likewise annular, concentrically arranged, thin, preferably flexible or articulated upon action of force, to an annular, concentrically constructed load discharge part 5, and wherein the load discharge part (5) extends from the connecting web (4) axially in the opposite direction to the load introduction plate (1), and a concentrically formed mounting flange (7), which is attached on the radially outer side of the load discharge part (5) via a third, likewise annular, concentrically arranged, thin, thus flexible or articulated connecting web (6).

2. Load cell according to claim 1, which is produced from one material part.

3. Load cell according to any one of the preceding claims, wherein the load introduction plate has a planar surface (1b).

4. Load cell according to the preceding claim, wherein the load introduction plate has a centering hole.

5. Load cell according to one of the preceding claims 1 to 2, wherein the load introduction plate has a surface in the form of a spherical cap.

6. Load cell according to any one of the preceding claims, wherein the two first two connecting webs (2, 4) are produced on approximately the same plane or at the same axial distance from the plane of the load introduction plate (1) and with the same axial strength and radial length.

7. Load cell as claimed in any one of the preceding claims, wherein the deformation body (3) [sic - missing "extends"?] from the first two connecting webs (2, 4) axially in the opposite direction towards the load introduction plate (1) to a free end face (3b), and on which the side situated opposite the load introduction plate (1) is equipped with strain gauges in such a way that both longitudinal extensions as well as transverse contractions are detected in response to a deformation of the deformation body (3) as a result of tangential forces (F_{Y})_{.}

8. Load cell according to any one of the preceding claims, wherein the position, i.e., the radially extending middle plane of the third connecting web (6) with respect to the load discharge part (5) and the mounting flange (7), and also the axial strength of the connecting web (6) can be adjusted depending on maximum horizontal forces to be transmitted.

9. Load cell according to any ane of the preceding claims, wherein the mounting flange (7) is provided with a number of through holes (11), which, each spaced apart from one another, extend parallel to the axis A via the mounting flange (7) for fattening the mounting flange to the support plate.

10. Load cell according to any one of the preceding claims, wherein a cover for strain gauges is provided, specifically by means of a separate bottom plate (8) connected to the load discharge part (5), which together with the load discharge part forms a cavity towards the deformation body (3) and the material core (1a).

## Revendications

1. Cellule de charge, qui est essentiellement symétrique en rotation et cylindrique et possède un axe de rotation A, présentant
un noyau métallique (1a) cylindrique intérieur,
une plaque d'introduction de charge (1), formée de façon concentrique au noyau, qui s'étend essentiellement sur la totalité du diamètre de la cellule de charge,
une barrette de raccordement (2) constituée de façon concentrique sur le noyau métallique, s'étendant radialement vers l'extérieur et axialement distante de la plaque d'introduction de charge (1), mince, qui est ainsi flexible ou respectivement articulée lors de l'action d'une force, par le biais de laquelle un corps de déformation (3) annulaire est raccordé à la plaque d'introduction de charge (1), le corps de déformation (3) étant, sur son côté radialement extérieur, attaché à une partie d'évacuation de charge (5) annulaire constituée à son tour de façon concentrique avec une deuxième barrette de raccordement (4), uniformément annulaire disposée de façon concentrique, mince, donc flexible ou respectivement articulée lors de l'application d'une force, et la partie d'évacuation de charge (5) s'étendant à partir de la barrette de raccordement (4) axialement dans la direction opposée vers la plaque d'introduction de charge (1),
et une bride de fixation (7) constituée de façon concentrique qui, sur le côté radialement extérieur de la partie d'évacuation de charge (5), est attachée par le biais d'une troisième barrette de raccordement (6) uniformément annulaire disposée de façon concentrique, mince, donc flexible ou respectivement articulée lors de l'application d'une force.

2. Cellule de charge selon la revendication 1, qui est réalisée en une pièce de matériau.

3. Cellule de charge selon l'une des revendications précédentes, la plaque d'introduction de charge possédant une surface (1b) plane.

4. Cellule de charge selon la revendication précédente, la plaque d'introduction de charge possédant un alésage de centrage.

5. Cellule de charge selon l'une des revendications précédentes 1 à 2, la plaque d'introduction de charge possédant une surface du type calotte sphérique.

6. Cellule de charge selon l'une des revendications précédentes, les deux premières barrettes de raccordement (2, 4) étant réalisées approximativement sur le même plan ou respectivement à la même distance axiale au plan de la plaque d'introduction de charge (1) ainsi qu'avec la même épaisseur axiale et la même longueur radiale.

7. Cellule de charge selon l'une des revendications précédentes, le corps de déformation (3) étant, à partir des deux premières barrettes de raccordement (2, 4) axialement dans la direction opposée par rapport à la plaque d'introduction de charge (1) vers une extrémité frontale (3b) libre et sur le côté opposé à la plaque d'introduction de charge (1), équipé de jauges de contrainte de telle sorte que des allongements longitudinaux ainsi que des contractions transversales sont détectées en réaction à une déformation du corps de déformation (3) à la suite de forces tangentielles (F_{y}).

8. Cellule de charge selon l'une des revendications précédentes, la position, c'est-à-dire le plan moyen s'étendant radialement, de la troisième barrette de raccordement (6) pouvant être réglée par rapport à la partie d'évacuation de charge (5) et à la bride de fixation (7), de même que l'épaisseur axiale de la barrette de raccordement (6) peut être réglée respectivement en fonction de forces horizontales maximales à transmettre.

9. Cellule de charge selon l'une des revendications précédentes, la bride de fixation (7) étant équipée d'un certain nombre d'ouvertures de passage (11) qui s'étendent respectivement à distance les unes des autres à travers la bride de fixation (7) parallèlement à l'axe A pour la fixation de la bride de fixation sur la plaque de support.

10. Cellule de charge selon l'une des revendications précédentes, un recouvrement pour des jauges de contrainte étant fourni, et cela par un disque de fond (8) séparé raccordé à la partie d'évacuation de charge (5) qui constitue, conjointement avec la partie d'évacuation de charge, une cavité dirigée vers le corps de déformation (3) et vers le noyau de matériau (1a).
